# EUROPEAN PATENT APPLICATION

(11) **EP 4 691 237 A1**
(43) Date of publication of application: **11.02.2026**
(21) Application number: 24788719.3
(22) Date of filing: 09.04.2024
(51) Int. Cl.: A01M 7/00, A01N 25/00, A01N 25/06, A01N 53/06, A01N 53/08, A01N 53/10, A01P 7/04

(54) **METHOD FOR CONTROLLING INSECT PEST IN CONTAINER**

(30) Priority: 10.04.2023 JP 2023063603; 28.06.2023 JP 2023106137
(71) Applicant: FUMAKILLA LIMITED, Tokyo 101-8606 (JP)
(72) Inventor: SASAKI Tomonori, Hatsukaichi-shi, Hiroshima 739-0494 (JP); HONDA Yoshiko, Hatsukaichi-shi, Hiroshima 739-0494 (JP); ISHIKADO Yohei, Hatsukaichi-shi, Hiroshima 739-0494 (JP)
(74) Representative: Germain Maureau
(86) International application number: PCT/JP2024/014394
(87) International publication number: WO 2024/214695

(57) **Abstract**

A method for controlling insect pests in a cargo container 100 accommodating a cargo item 200 includes: preparing an aerosol product containing an insecticide and a propellant; and jetting the insecticide from a jetting port of the aerosol product, with the jetting port directed toward gaps S1 to S4 in the container 100, and closing a door of the container 100 after the jetting of the insecticide.

## Description

### TECHNICAL FIELD

The present disclosure relates to a method for controlling insect pests that have entered a cargo container.

### BACKGROUND ART

As described in Non-Patent Document 1, for example, there have been reports of insect pests designated as invasive alien species, such as fire ants and Argentine ants, entering cargo containers during overseas cargo operations and being brought alive into Japan. The fire ants *(Solenopsis invicta*) are highly aggressive and harmful to the human body as its sting may cause anaphylactic symptoms in susceptible individuals. Furthermore, its impact on ecosystems, such as displacing native ant species, has raised concerns. In order to prevent the entry and establishment of such invasive alien species in Japan, pest control is performed inside containers. For example, fumigants or smoking agents containing phosphine or methyl bromide are used within the containers.

### CITATION LIST

### PATENT DOCUMENT

[Non-Patent Document 1] Organization of the Ministry of the Environment, Nature Conservation Bureau, Wildlife Division, Office for Alien Species Management, "Basic Approach to Fire Ant Control, Version 3.2", March 2022

### SUMMARY OF THE INVENTION

### TECHNICAL PROBLEM

It is known that a high control effect can be obtained by using a fumigant or a smoking agent containing phosphine or methyl bromide. However, phosphine is designated as a poisonous substance (formulations containing aluminum phosphide, which is commonly used as a precursor, together with its decomposition accelerator, are specified poisonous substances), and methyl bromide is designated as a deleterious substance. Therefore, during operations, preparation of an air supply pipe, a protective suit, and other equipment is required, making the process complicated.

Another problem is that the treatment takes time, because if a fumigant or a smoking agent is used, it takes several days or longer from the start to the end of the operations. Accordingly, the container needs to be stored in a warehouse or the like for several days. Particularly in the case of a cargo container, a delay in distribution, a storage cost, and the like are significant problems.

On the other hand, for the household insecticides, a technique is known in which an aerosol product containing an insecticide is sprayed in a living space to control insect pests easily in the living space. However, a large number of cargo items are loaded in the container, and the majority of the internal space is filled with the cargo items. In addition, the container has a long depth and is significantly different from a typical living space. Thus, to date, no method has been known that allows easy control of insect pests in a space that has a considerable depth and is largely filled with cargo items.

The present disclosure has been made in view of the foregoing, and its objective is to easily control insect pests that have entered a container within a short period of time.

### SOLUTION TO THE PROBLEM

The applicant of the present application has found that an unexpectedly high control effect can be achieved by preparing an aerosol product containing an insecticide and a propellant for jetting the insecticide, and jetting the insecticide from a jetting port of the aerosol product, with the jetting port directed toward a gap in the container. That is, in order to achieve the aforementioned objective, the present disclosure is directed to a method for controlling an insect pest in a container accommodating at least one cargo item. The control method includes: preparing an aerosol product containing an insecticide and a propellant for jetting the insecticide; and jetting the insecticide from a jetting port of the aerosol product, with the jetting port directed toward a gap in the container, and closing a door of the container after the jetting of the insecticide.

In other words, the gap inside the container is narrow due to cargo items accommodated in the container, and the volume of the space where the insecticide needs to be diffused is small. Accordingly, the insecticide jetted toward the gap in the container passes through the gap and diffuses easily toward the rear side of the container and both sides in the width direction, and diffuses easily in the height direction as well. As a result, the insecticide is distributed over every region in the container, and exerts a high control effect on the insect pests hiding in the region. Thus, the insect pests in the container can be controlled easily and in a short period of time by using the insecticide without using a known fumigant or smoking agent.

The insecticide may be jetted toward a gap formed between a wall surface of the container and the at least one cargo item. Thus, the insecticide is widely diffused toward the rear side and in the height direction through the gap between the wall surface of the container and the cargo item.

The insecticide may be jetted toward a gap formed between one of a plurality of cargo items accommodated in the container and another cargo item adjacent to the one of the cargo items. Thus, the insecticide is widely diffused toward the rear side and in the height direction through the gap between the cargo items.

In general, the cargo items are accommodated in a container while placed on a pallet. The insecticide may be jetted toward a gap of a fork pocket formed in the pallet. That is, some pallets have a fork pocket into which a fork of the forklift is inserted during cargo handling work. In this case, the fork pocket serves as a gap formed between the bottom of the container and the cargo item. The insecticide jetted into the fork pocket passes through the fork pocket and diffuses toward the rear side of the container and eventually diffuses widely in the width direction and the height direction of the container.

An aerosol product containing a chemical that contains, as the insecticide, at least one of transfluthrin or metofluthrin may be prepared to jet the insecticide into the gap. This can sufficiently enhance the insect pest control effect.

20 mg or more of the insecticide may be jetted toward the gap, or 40 mg or more of the insecticide may be jetted toward the gap of a fork pocket. This can exert a high control effect on the insect pests in every region in the container.

### ADVANTAGES OF THE INVENTION

As described above, since the insecticide is jetted toward a gap in the container accommodating the cargo items, insect pests that have entered the container can be controlled easily within a short period of time.

### BRIEF DESCRIPTION OF THE DRAWINGS

[FIG. 1] FIG. 1 is a perspective view of a container to which a method for controlling insect pests in a container according to an embodiment of the present invention is applied.
[FIG. 2] FIG. 2 is a view of the container with its door open, as viewed from the opening side.
[FIG. 3] FIG. 3 is a sectional view taken along line III-III in FIG. 2.
[FIG. 4] FIG. 4 is a perspective view of an aerosol product according to an embodiment of the present invention.

### DESCRIPTION OF EMBODIMENTS

Hereinafter, embodiments of the present invention will be described in detail with reference to the drawings. The description of preferred embodiments below is merely an example in nature, and is not intended to limit the scope, application, or use of the present invention.

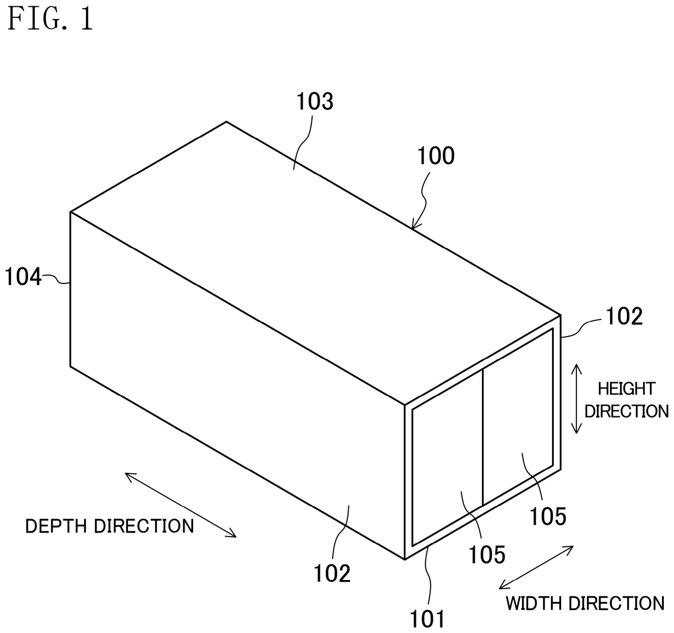

FIG. 1 is a perspective view of a container 100 to which a method for controlling insect pests in a container according to an embodiment of the present invention is applied. The container 100 is a cargo container, and is used, for example, for transporting cargo items from overseas to the destination country. While loading cargo items into the container 100 abroad, insect pests may enter the container 100 together with the cargo items. The insect pests which have entered the container 100 may be brought alive to the destination country, come out together with the cargo items, and be established in the destination country as an invasive alien species. The method for controlling insect pests in a container according to the present embodiment is a method for controlling (specifically, exterminating) insect pests in the container 100 which are carried alive in the container 100. The type of insect pests to be controlled is not particularly limited, and examples thereof include ants of designated invasive alien species, such as fire ants, Argentine ants, tropical fire ants, and browsing ants.

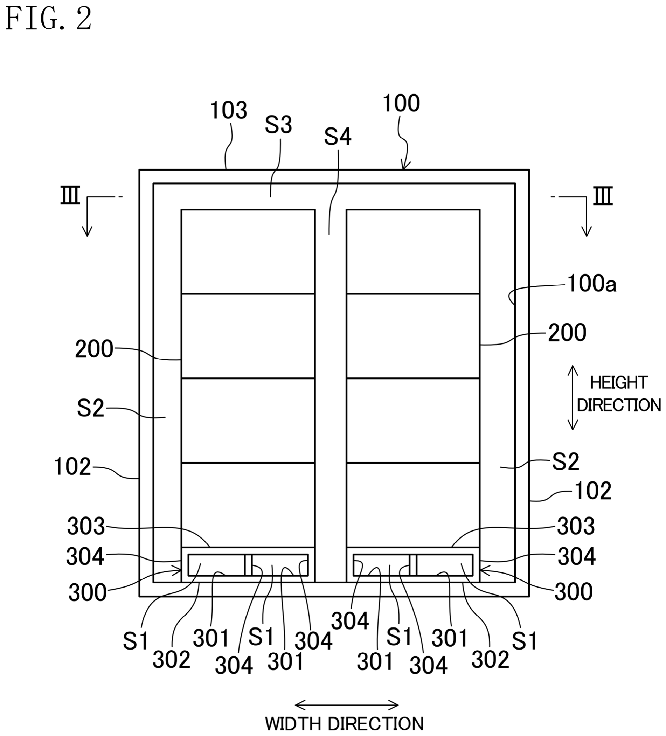

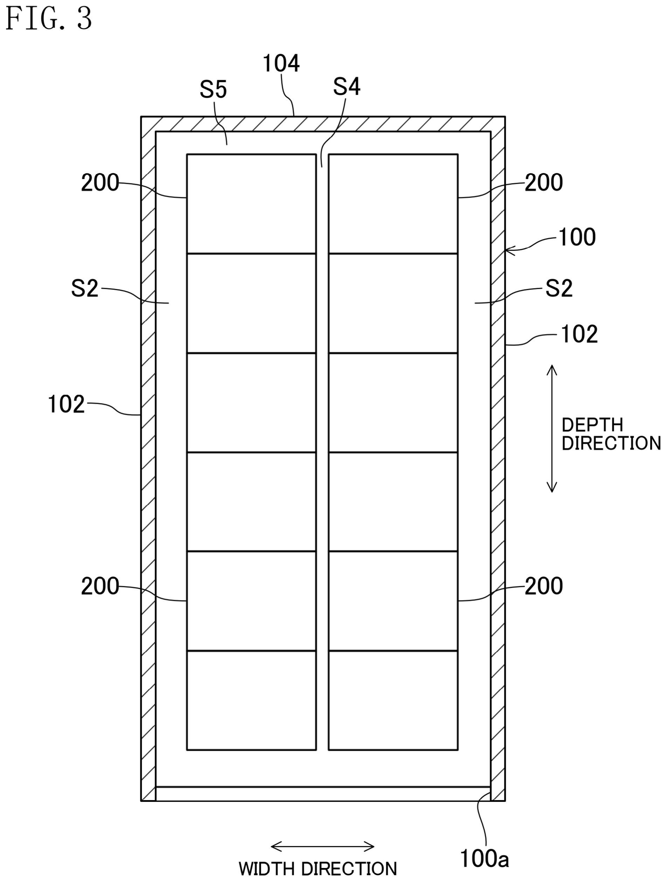

The container 100 is a conventional container. That is, the container 100 includes a bottom plate 101, a pair of side plates 102, a top plate 103, a rear plate 104, and a door 105. The bottom plate 101 is configured as a member with a depth greater than its width, and constitutes a bottom wall of the container 100. One of the side plates 102 extends upward and in the depth direction from one end of the bottom plate 101 in the width direction, and constitutes one of side walls of the container 100. The other side plate 102 extends upward and in the depth direction from the other end of the bottom plate 101 in the width direction, and constitutes the other side wall of the container 100. The top plate 103 extends from the upper end of one of the side plates 102 to the upper end of the other side plate 102, and constitutes an upper wall (ceiling) of the container 100. The rear plate 104 extends upward and in the width direction from the rear end of the bottom plate 101, and constitutes a rear wall of the container 100. The door 105 is a member for opening and closing an opening 100a (shown in FIG. 2) formed on the front side of the container 100. The opening 100a is used for loading cargo items into the container 100, and the cargo items in the container 100 can be unloaded through the opening 100a. The door 105 may be formed as a double-swing door, for example. In FIGS. 2 and 3, the door 105 is omitted.

In maritime transport, 20-foot or 40-foot dry containers are commonly used, and these containers can be examples of the container 100. The containers may include, in addition to general containers, so-called high-cube containers having a greater height.

The container 100 is not particularly limited, and may be, for example, a 40-foot high-cube container having dimensions of 12 m in depth, 2.3 m in width, and 2.7 m in height, as an example. The present embodiment is applicable to a container larger than this container 100, and is also applicable to a container smaller than this container 100. The method for controlling insect pests in a container according to the present embodiment is applicable to a container 100 having a volume of 76.3 m³ or less, and provides an even greater control effect when applied to a container 100 having a volume of 33.1 m³ or less.

The cargo items 200 (shown in FIGS. 2 and 3) accommodated in the container 100 may include items in cardboard boxes or bags, but are not limited thereto and may be of any type. The filling ratio of the cargo items in the container is not particularly limited, and is preferably 50% or more and 95% or less, more preferably 60% or more and 80% or less in terms of weight filling ratio, for example. In terms of volume filling ratio, the filling ratio is preferably 25% or more and 95% or less, more preferably 30% or more and 80% or less. If the volume filling ratio is less than 25%, the arrangement of the cargo items and the gaps therebetween become uneven, which tends to cause variations in the effect. If the volume filling ratio exceeds 95%, the chemical to be described later is less likely to diffuse throughout the container.

As illustrated in FIG. 2, cargo items 200 to be accommodated in the container 100 are generally placed on a pallet 300. That is, a forklift (not shown) is used when the cargo items 200 are loaded into the container 100 or unloaded from the container 100. The forklift is provided with forks. The forks are inserted into fork pockets 301 formed in the pallet 300, thereby allowing the pallet 300 to be raised by the forks and carry the cargo items 200.

Types of pallets include, for example, flat pallets, box pallets, roll box pallets, post pallets, sheet pallets (without fork pockets), silo pallets, and tank pallets. The type is not particularly limited, but a flat pallet is preferable among them. The material of the pallet can be wood, metal, plastic, and paper, for example. The material is not particularly limited, but wood and plastic are preferable among them. The pallet may be of any size used internationally. Specifically, sizes defined by ISO, JIS, and the like may be used. In particular, pallets measuring 1100 mm × 1100 mm or 1200 mm × 1000 mm are preferred.

The size and shape of the pallet 300 are not particularly limited, but the pallet 300 is preferably provided with fork pockets 301 on both left and right sides. Specifically, the lower plate portion 302 and the upper plate portion 303 of the pallet 300 are spaced apart from each other in the up-down direction. Vertical plate portions 304 extending in the up-down direction are provided between the lower plate portion 302 and the upper plate portion 303 and apart from each other in a left-right direction. The lower plate portion 302 is a portion to be placed on the bottom plate 101 of the container 100. The cargo items 200 are placed on the upper plate portion 303. The vertical plate portions 304 extend in the depth direction. Accordingly, the fork pockets 301 have spaces extending in the depth direction. The pallet 300 is located between the cargo items 200 and the bottom plate 101 of the container 100: the fork pockets 301 of the pallet 300 form gaps between the cargo items 200 and the bottom plate 101 of the container 100. The gaps formed by the fork pockets 301 extend in the depth direction of the container 100.

In order to load a large number of cargo items 200, multiple pallets 300 are arranged side by side in the depth direction of the container 100. Since the pallets 300 arranged in the depth direction each have fork pockets 301 extending in the depth direction, the fork pockets 301 of the pallets 300 arranged in the depth direction communicate with each other, thereby forming gaps S1 extending in the depth direction of the container 100 and reaching the rear of the container 100.

Gaps S2 extending in the depth direction and the up-down direction are formed between the inner surfaces (wall surfaces) of the side plates 102 of the container 100 and the side surfaces of the cargo items 200. The gaps S2 may be only partially formed if the cargo items 200 are accommodated such that they are partially in contact with the inner surfaces of the side plates 102. Even in such a case, the gaps S2 include portions extending in the depth direction and portions extending in the height direction.

A gap S3 extending in the depth direction and the width direction is formed between the inner surface of the top plate 103 of the container 100 and the upper surfaces of the cargo items 200. The gap S3 may be only partially formed if the cargo items 200 are accommodated such that they are partially in contact with the inner surface of the top plate 103. Even in such a case, the gap S3 includes a portion extending in the depth direction and a portion extending in the width direction.

If the cargo items 200 loaded on one side in the width direction and the cargo items 200 loaded on the other side in the width direction are spaced apart from each other in the width direction, a gap S4 is formed between the cargo items 200 on one side in the width direction and the cargo items 200 on the other side. That is, a gap S4 extending in the up-down direction and the depth direction is formed between one cargo item 200 (a cargo item on one side in the width direction) and another cargo item (another cargo item on the other side in the width direction) adjacent to the one cargo item 200 among the cargo items 200 accommodated in the container 100. If the cargo items 200 on both sides in the width direction are in contact with each other, the gap S4 may not be formed. However, the cargo items 200 on both sides in the width direction may not be in contact in some areas, and the gap S4 is formed in the noncontacting regions.

As illustrated in FIG. 3, a gap S5 extending in the width direction and the height direction is formed between the inner surface of the rear plate 104 of the container 100 and the rear surfaces of the cargo items 200 accommodated in the rearmost portion. The gap S5 may be only partially formed if the cargo items 200 are accommodated such that they are partially in contact with the inner surface of the rear plate 104. Even in such a case, the gap S5 includes a portion extending in the height direction and a portion extending in the width direction. The dimensions of the gaps S1 to S5 vary depending, for example, on the shape and size of the cargo items 200, and how they are stacked. Even a slight gap formed allows particles jetted from an aerosol product 1, described later, to diffuse into the gap. It is preferable that the gap be 2 cm or more, or 3 cm or more, for example.

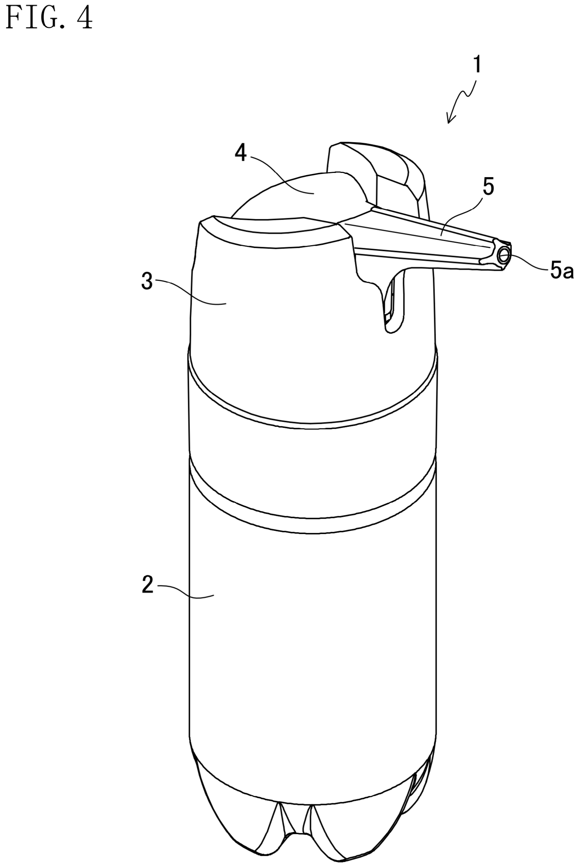

Next, an aerosol product 1 used in the present embodiment will be described with reference to FIG. 4. The aerosol product 1 includes an aerosol container 2, a cap 3, a jetting button 4, and a nozzle 5. The aerosol product 1 is used in a method for controlling insect pests in a container, and therefore, can also be referred to as an aerosol product for controlling insect pests in a container.

The aerosol container 2 is configured as a pressure-resistant container, and an upper portion of the aerosol container 2 is provided with a valve mechanism (not shown). The valve mechanism is configured to be operable by the jetting button 4, and is configured as a fixed-volume jet valve mechanism which jets a fixed volume of the contents in the aerosol container 2 with a single press of the jetting button 4 and then stops. The fixed volume can be in a range, for example, of 0.2 ml or more and 2.0 ml or less. The valve mechanism provided in the aerosol container 2 does not have to be of a fixed-volume jet type, and may be configured to continuously jet the contents of the aerosol container 2 while being pressed by the jetting button 4.

The cap 3 is a member attached to the upper portion of the aerosol container 2. The nozzle 5 is integral with the jetting button 4, and formed into a cylindrical shape or tubular shape for jetting the contents from the aerosol container 2 through the valve mechanism. A jetting port 5a is open at the distal end of the nozzle 5. The structures and shapes of the aerosol container 2, the cap 3, the jetting button 4, and the nozzle 5 are mere examples, and other structures and shapes than those shown may be used.

The aerosol container 2 contains at least a chemical (aerosol stock solution) containing an insecticide and a propellant for jetting the chemical, that is, the insecticide. The insecticide may be, for example, a pyrethroid-based insecticide, an organic phosphorus-based insecticide, a carbamate-based insecticide, a neonicotinoid-based insecticide, or an essential oil, but the pyrethroid-based insecticide is preferable among them. The use of the pyrethroid-based insecticide provides a higher control effect and enhanced safety for pest control operators. Examples of the pyrethroid-based insecticide include permethrin, phenothrin, bifenthrin, pyrethrins, prallethrin, transfluthrin, metofluthrin, profluthrin, empenthrin, terallethrin, etc. One kind of these substances may be used, or a mixture of two or more kinds may be used. Among these, transfluthrin and metofluthrin are preferable.

The chemical contains, for example, at least one of transfluthrin or metofluthrin, or may contain both transfluthrin and metofluthrin. The chemical may contain a pyrethroid-based insecticide other than transfluthrin and metofluthrin.

Preferably, the pyrethroid-based insecticide is highly volatile at normal temperature; for example, its vapor pressure at 25°C is preferably 1.0 × 10⁻⁵ Pa or more, more preferably 1.0 × 10⁻⁴ Pa or more. If a pyrethroid-based insecticide that is highly volatile is used, the pyrethroid-based insecticide revolatilizes and diffuses from the chemical that has adhered to the wall surfaces or the like in the container, making it easier for the pyrethroid-based insecticide to be distributed through narrow gaps and other areas.

The aerosol container 2 may contain, as the chemical (aerosol stock solution), solvents such as alcohol-based solvents including ethanol and isopropanol, hydrocarbon-based solvents including normal paraffin and isoparaffin, ester-based solvents including isopropyl myristate, and hydrofluoroolefin (HFO, a fluorine-based solvent), a synergist, a repellent component, an disinfecting agent, an antibacterial component, a fragrance, a deodorant, a fungicide, a surfactant, and the like, as needed, in addition to the pyrethroid-based insecticide. In such a case, the solvent, the synergist, and the like are also jetted by the propellant.

The propellant may be, for example, only one of liquefied petroleum gas (LPG) or dimethyl ether (DME), or may be a mixture of these substances.

The volume ratio (liquid-gas ratio) between the chemical (aerosol stock solution) and the propellant is preferably 15/85 or more, more preferably 6.4/93.6 or more. The mean particle diameter of the particles jetted from the jetting port 5a is preferably in the range of 32.9 µm or less, more preferably in the range of 20.5 µm or less. The mean particle diameter refers to a so-called D50 mean particle diameter, which is measured at a distance of 50 cm from the jetting port 5a when the aerosol is jetted horizontally from the jetting port 5a at an ambient temperature of 25°C.

Next, the method of measuring the mean particle diameter will be described. Although not shown, the chemical (aerosol stock solution) containing a pyrethroid-based insecticide and a solvent, which are substances to be jetted, is jetted from a position where the distance between a laser beam emitted from a laser light irradiator of a particle size analyzer to a light receiving unit and the jetting port 5a is 50 cm, such that the chemical passes through the laser beam in a direction orthogonal to the emitting direction. A measurement is made while the chemical is being jetted, and the particle size distribution of the chemical is analyzed using an automatic arithmetic processing unit, thereby obtaining the mean particle diameter. This is a well-known technique. The measurement instrument is LDSA-SPR 1500A manufactured by MicrotracBEL Corp.

Next, a method of controlling insect pests in a container will be described. The method of controlling insect pests in a container according to the present embodiment is a method of controlling insect pests in the cargo container 100 accommodating the cargo items 200 placed on the pallet 300, as illustrated in FIG. 2. In this control method, an aerosol product 1 (shown in FIG. 4) containing a pyrethroid-based insecticide and a propellant for jetting the pyrethroid-based insecticide is prepared.

The door 105 is opened, with the cargo items 200 accommodated in the container 100; the jetting port 5a of the aerosol product 1 is directed to the gaps S1 to S4 in the container 100; and the jetting button 4 is operated to jet the pyrethroid-based insecticide from the jetting port 5a. For jetting toward the gaps S2 or the gap S4, jetting is performed, for example, from a position at a height of 150 cm above the floor surface of the container 100. This is based on the assumption that the pest control operator performs the jetting in a standing posture, which improves workability, and jetting from the above-described position facilitates diffusion of the particles to the rear side of the container 100 and in the up-down direction. After the pyrethroid-based insecticide is jetted, the door 105 of the container 100 is closed.

The jetting port 5a may be directed toward any of the gaps S1 to S4. However, depending on the state of accommodation of the cargo items 200, the gaps S2 to S4 can be extremely narrow, and it may be difficult to perform jetting from the jetting port 5a of the aerosol product 1 toward the gaps. In such a case, it is preferable to perform jetting toward the gaps S1 (fork pockets 301). This is because the gaps S1 are not affected by the state of accommodation of the cargo items 200. After the pyrethroid-based insecticide is jetted toward any one of the gaps S1 to S4, the pyrethroid-based insecticide may be jetted toward another gap. For example, when the pyrethroid-based insecticide is jetted with the jetting port 5a directed toward the gaps S1, i.e., the fork pockets 301, the jetted particles diffuse toward the rear side through the gaps S1, reach the gap S5 on the rear side, and diffuse in the height direction and the width direction from the gap S5 on the rear side. The particles that have reached the gap S5 on the rear side diffuse into the gap S4 between the cargo items 200, reach the gaps S2 on the lateral sides and diffuse in the height direction and the depth direction, and diffuse into the gap S3 on the upper side. Thus, insect pests that have entered the container 100 can be controlled without using a known fumigant or smoking agent.

In jetting the pyrethroid-based insecticide toward the fork pockets 301, 40 mg or more of the pyrethroid-based insecticide is jetted. The amount of 40 mg or more of the pyrethroid-based insecticide may be jetted with a single press of the jetting button 4, or may be jetted with multiple presses of the jetting button 4. The upper limit of the pyrethroid-based insecticide to be jetted toward the fork pockets 301 is preferably 300 mg or less. Even if the amount of the pyrethroid-based insecticide jetted exceeds 300 mg, the effect of controlling insect pests is about the same as that achieved by 40 mg. Thus, the upper limit of the pyrethroid-based insecticide is set to 300 mg or less.

When the pyrethroid-based insecticide is jetted with the jetting port 5a directed toward the gap S2 on the lateral side, the jetted particles diffuse toward the rear side and in the up-down direction through the gap S2, and reach the gap S3 on the upper side and the gap S5 on the rear side. The particles also diffuse in the height direction and the width direction from the gap S5 on the rear side, and reach the inside of the fork pockets 301 as well. Thus, insect pests that have entered the container 100 can be controlled without using a known fumigant or smoking agent.

When the pyrethroid-based insecticide is jetted with the jetting port 5a directed toward the gap S4 between the cargo items 200, the jetted particles diffuse toward the rear side and in the height direction through the gap S4, and reach the gap S5 on the rear side and the gap S3 on the upper side. The particles also diffuse in the height direction and the width direction from the gap S5 on the rear side, and reach the inside of the fork pockets 301 as well. Thus, insect pests that have entered the container 100 can be controlled without using a known fumigant or smoking agent.

When the pyrethroid-based insecticide is jetted with the jetting port 5a directed toward the gap S3, the jetted particles diffuse toward the rear side and in the width direction through the gap S3, and reach the gap S5 on the rear side, the gaps S2 on the lateral sides, and the gap S4 between the cargo items 200. The particles also diffuse in the height direction and the width direction from the gap S5 on the rear side, and reach the inside of the fork pockets 301 as well. Thus, insect pests that have entered the container 100 can be controlled without using a known fumigant or smoking agent. When the pyrethroid-based insecticide is jetted into the gaps S2 to S4, 20 mg or more of the pyrethroid-based insecticide is jetted. The amount of 20 mg or more of the pyrethroid-based insecticide may be jetted with a single press of the jetting button 4, or may be jetted with multiple presses of the jetting button 4. Even if the amount of the pyrethroid-based insecticide jetted exceeds 300 mg, the effect of controlling insect pests is about the same as that achieved by 20 mg. Thus, the upper limit of the pyrethroid-based insecticide is set to 300 mg or less.

The time for which the door 105 is kept closed after the pyrethroid-based insecticide is jetted can be, for example, 30 minutes to 2 hours, but is not limited thereto, and may be a longer time. The longer time can be, for example, 2 hours to 24 hours. By keeping the door 105 closed, the pyrethroid-based insecticide jetted into the container 100 naturally volatilizes and is more likely to be distributed in the container 100.

Since the spray distance of typical aerosol is considered being from several tens of centimeters to several meters, it was expected that distributing the chemical throughout the entire container having a deep of 12 m (in the case of a 40-foot container) would be extremely difficult and would require a large amount of jetting. It was completely unexpected that a sufficient effect could be obtained even with a small jetting amount as described above.

It is not clear why such an effect can be achieved; however, it may be due to the gaps S1 to S4 serving as passages extending in the depth direction of the container, which allow the chemical to diffuse to the rear side. At this moment, it is not necessary to volatilize the pyrethroid-based insecticide in the entire volume of the container 100. Since the volume occupied by the cargo items 200 can be regarded as a reduction in the internal volume of the container 100, it is sufficient to volatilize the pyrethroid-based insecticide in the gaps S1 to S5. The volume requiring volatilization is small. Therefore, even the aerosol product 1 can achieve a control effect equivalent to that of a fumigant or a smoking agent. After a lapse of the above-mentioned time, the door 105 may be opened and the cargo items 200 may be unloaded.

### [Examples]

Next, an example of the present invention will be described. The present invention is not limited to the example.

### <Insect Pest Control Tests>

Tests of controlling insect pests in a container accommodating cargo items placed on a pallet were carried out. Twenty pallets were placed in a 40-foot high-cube container (internal dimensions: 12.0 m in depth, 2.3 m in width, and 2.7 m in height), and cardboard boxes with a height of 2.2 m were laid thereon to reproduce a state in which cargo items were loaded. The widths of the gaps between the wall and the cardboard boxes were about 7 cm to 8 cm. Ten test insects were placed in a plastic cup (φ 76 mm × height 38 mm) coated with talc to prevent the test insects from escaping, together with hydrated cotton. The test insects were placed at a total of 15 locations in the container: on the floor surface at positions 0 m, 6 m, and 12 m from the loading entrance of the container and at heights of 1 m and 2 m above the floor surface at the 12 m position on the rear side of the container, at each of the middle of the container, a position near the left side wall, and a position near the right side wall.

**[Table 1]**

| Formulation | Pyrethroid-Based Insecticide | Solvent | Propellant | Jetting Amount per Jet Operation (mL) | Liquid-Gas Ratio | Mean Particle Diameter D50 at Distance of 50 cm (µm) |
|---|---|---|---|---|---|---|
| Formulation 1 | Transfluthrin | Ethanol | LPG | 1 | 6.4/93.6 | 20.5 |
| Formulation 2 | Transfluthrin | Ethanol | LPG | 1 | 6.4/93.6 | 18.7 |
| | d·d-T80-Prallethrin | | | 1 | | |
| Formulation 3 | Transfluthrin | Kerosene | LPG | 1 | 5/95 | 60.7 |
| | Cyfluthrin | | | 1 | | |
| Formulation 4 | Metofluthrin | Ethanol | LPG | 1 | 6.4/93.6 | 18.1 |
| Formulation 5 | Transfluthrin | Ethanol | LPG | 1 | 30/70 | 50.9 |
| Formulation 6 | Transfluthrin | Ethanol | LPG | 1 | 15/85 | 32.9 |
| Formulation 7 | Transfluthrin | Isopropanol | LPG | 1 | 6.4/93.6 | 18.8 |

As test samples, formulations 1 to 7 shown in Table 1 were prepared. For the formulation 1, samples having different concentrations of transfluthrin in a chemical (aerosol stock solution) were prepared. The formulation 2 contains, as a pyrethroid-based insecticide, transfluthrin and d·d-T80-prallethrin. The formulation 3 contains, as a pyrethroid-based insecticide, transfluthrin and cyfluthrin. The formulation 4 contains metofluthrin as a pyrethroid-based insecticide. The formulation 7 contains isopropanol as a solvent.

In preparing the test samples, an aerosol container equipped with a fixed-volume jet valve was filled with a chemical (aerosol stock solution) containing: a pyrethroid-based insecticide and a solvent; and a propellant, and thereafter, an aerosol cap having a jetting port was attached to the aerosol container. The jetting amount per jet operation by the fixed-volume jet valve was 1 mL.

After jetting the test sample a specified number of times, the door of the container was closed for a fixed period of time; thereafter, the test insects were collected, and the insecticidal rate was checked 24 hours later. As the test insects, Argentine ants (*Linepithema humile)* collected in Hatsukaichi City, Hiroshima Prefecture, were used. The test results are shown in Tables 2 to 6.

**[Table 2]**

| Sample | | Formulation 1 | | | | |
|---|---|---|---|---|---|---|
| Jetting Position | | Middle Gap Height: 150 cm | Middle Gap Height: 150 cm | Left and Right Gaps Height: 150 cm | Left and Right Gaps and Middle Gap Height: 150 cm | Left and Right Gaps and Middle Gap Height: 150 cm |
| Chemical Amount (mg) | Transfluthrin | 15 | 20 | 40 | 60 | 100 |
| Number of Jets | | 1 | 1 | 2 | 3 | 5 |
| Exposure Time (h) | | 6 | 6 | 6 | 6 | 6 |
| Insecticidal Rate (%) | | 89 | 100 | 100 | 100 | 100 |
| Sample | | Formul ation 2 | | | | |
| Jetting Position | | Left and Right Gaps and Middle Gap Height: 150 cm | Left and Right Gaps and Middle Gap Height: 150 cm | | | |
| Chemical Amount (mg) | Transfluthrin | 60 | 100 | | | |
| | d·d-T80-Prallethrin | 9 | 15 | | | |
| Number of Jets | | 3 | 5 | | | |
| Exposure Time (h) | | 6 | 6 | | | |
| Insecticidal Rate (%) | | 100 | 100 | | | |
| Sample | | Formul ation 3 | | | | |

| Jetting Position | | Left and Right Gaps Height: 150 cm | Left and Right Gaps and Middle Gap Height: 150 cm | Left and Right Gaps Height: 150 cm | Left and Right Gaps Height: 150 cm | |
|---|---|---|---|---|---|---|
| Chemical Amount (mg) | Transfluthrin | 40 | 60 | 60 | 100 | |
| | Cyfluthrin | 5.1 | 7.6 | 7.6 | 12.7 | |
| Number of Jets | | 4 | 6 | 6 | 10 | |
| Exposure Time (h) | | 6 | 6 | 6 | 2 | |
| Insecticidal Rate (%) | | 47 | 100 | 100 | 98 | |
| Sample | | Formulation 4 | | | | |

| Jetting Position | | Left and Right Gaps Height: 150 cm | | | | |
|---|---|---|---|---|---|---|
| Chemical Amount (mg) | Metofluthrin | 40 | | | | |
| Number of Jets | | 2 | | | | |
| Exposure Time (h) | | 6 | | | | |
| Insecticidal Rate (%) | | 100 | | | | |

**[Table 3]**

| Sample | | Formulation 1 | | | | | |
|---|---|---|---|---|---|---|---|
| Jetting Position | | Fork Pocket | | | | | |
| Chemical Amount (mg) | Transfluthrin | 30 | 40 | 80 | 100 | 120 | 160 |
| Number of Jets | | 2 | 2 | 4 | 5 | 6 | 8 |
| Exposure Time (h) | | 6 | 6 | 6 | 6 | 6 | 6 |
| Insecticidal Rate (%) | | 51 | 100 | 100 | 100 | 100 | 100 |

| Sample | | Formulation 2 | | | | | |
|---|---|---|---|---|---|---|---|
| Jetting Position | | Fork Pocket | | | | | |
| Chemical Amount (mg) | Transfluthrin | 20 | 100 | 160 | 300 | 400 | |
| | d·d-T80- Prallethrin | 3 | 15 | 24 | 45 | 60 | |
| Number of Jets | | 1 | 5 | 8 | 15 | 20 | |
| Exposure Time (h) | | 6 | 6 | 6 | 6 | 6 | |
| Insecticidal Rate (%) | | 47 | 97 | 100 | 100 | 100 | |

| Sample | | Formulation 3 | | | | | |
|---|---|---|---|---|---|---|---|
| Jetting Position | | Fork Pocket | | | | | |
| Chemical Amount (mg) | Transfluthrin | 10 | 60 | | | | |
| | Cyfluthrin | 1.27 | 7.6 | | | | |
| Number of Jets | | 1 | 6 | | | | |
| Exposure Time (h) | | 2 | 24 | | | | |
| Insecticidal Rate (%) | | 21 | 43 | | | | |

**[Table 4]**

| Sample | | Formulation 5 | Formulation 6 |
|---|---|---|---|
| Jetting Position | | Middle Gap Height: 150 cm | Middle Gap Height: 150 cm |
| Liquid-Gas Ratio (Liquid/Gas) | | 30/70 | 15/85 |
| Mean Particle Diameter D50 at Distance of 50 cm (µm) | | 50.9 | 32.9 |
| Chemical Amount (mg) | Transfluthrin | 20 | 20 |
| Number of Jets | | 1 | 1 |
| Exposure Time (h) | | 6 | 6 |
| Insecticidal Rate (%) | | 45 | 73 |

**[Table 5]**

| Sample | | Formulation 7 | Formulation 7 |
|---|---|---|---|
| Jetting Position | | Middle Gap Height: 150 cm | Fork Pocket |
| Solvent | | Isopropanol | Isopropanol |
| Chemical Amount (mg) | Transfluthrin | 20 | 40 |
| Number of Jets | | 1 | 1 |
| Exposure Time (h) | | 6 | 6 |
| Insecticidal Rate (%) | | 72 | 99 |

**[Table 6]**

| Sample | | Formulation 1 | Formulation 1 |
|---|---|---|---|
| Jetting Position | | Middle Gap Height: 150 cm | Middle Gap Height: 150 cm |
| Volume Filling Ratio (%) | | 27 | 56 |
| Chemical Amount (mg) | Transfluthrin | 20 | 20 |
| Number of Jets | | 1 | 1 |
| Exposure Time (h) | | 6 | 6 |
| Insecticidal Rate (%) | | 95 | 100 |

In Tables 2 to 6, the "Middle Gap" indicates the gap S4 in FIG. 2; the "Left and Right Gaps" indicate the gaps S2 in FIG. 2; and the "Fork Pockets" indicate gaps S1 in FIG. 2. The "Number of Jets" is the total number of jets. In jetting the test sample multiple times, the test sample was jetted so that it was distributed as evenly as possible in the left-right direction (the width direction in FIG. 2). For example, if the number of jets toward the "Left and Right Gaps" is two, this indicates that the jetting was performed twice in total: once toward the right gap S2 and once toward the left gap S2. The "Chemical Amount" is the total amount of the pyrethroid-based insecticide jetted, and when the jetting was performed multiple times, it indicates the total amount.

The "Exposure Time" indicates the time during which the door of the container was kept closed after the jetting. The "Insecticidal Rate" was calculated as the insecticidal rate of all 15 locations.

As can be seen from Table 2, when the test samples are jetted toward the gaps formed between the wall surfaces of the container and the cargo items, and the gap formed between one of the cargo items accommodated in the container and another cargo item adjacent to the one of the cargo items, an insecticidal rate of 100% can be achieved by jetting 20 mg or more of transfluthrin. As can be seen from Table 3, when the test samples are jetted toward the gaps of fork pockets formed in the pallet, an insecticidal rate of 100% can be achieved by jetting 40 mg or more of the transfluthrin.

As can be seen from Table 5, in the formulation 7 as well, in which the solvent is isopropanol, high insecticidal rates are obtained in both of the jetting toward the middle gap and the jetting toward the fork pockets. That is, in the present invention, a high insecticidal rate can be obtained even when the type of the solvent is different.

Table 6 shows how the volume filling ratio (%) affects the insecticidal rate. The volume filling ratio is calculated by dividing the total volume of the cargo items by the internal volume of the container, where the internal volume of the container excludes the volume of the space occupied by the pallet. A volume filling ratio of 100% indicates that the cargo items are present in the entire space of the container except for the pallet. As shown in Table 6, a high insecticidal rate is obtained even when the volume filling ratio is 27% or 56%. From this result, the lower limit of the volume filling ratio at which a high insecticidal rate is obtainable can be set to 25%.

In the above tests, Argentine ants were used as the test insect pests. However, based on the applicant's studies, it is confirmed that fire ants and other species exhibit the same level of chemical sensitivity to the pyrethroid-based insecticide as Argentine ants. Therefore, the same efficacy as described above is exhibited on fire ants and other species.

The above-described embodiments are merely illustrative in all respects and should not be interpreted in a limited manner. Further, all modifications and changes which come within the meaning and scope of equivalency of the claims are intended to be embraced in the scope of the present invention.

### INDUSTRIAL APPLICABILITY

As can be seen from above, the method for controlling insect pests in a container according to the present invention can be used for controlling insect pests that have entered a cargo container.

### DESCRIPTION OF REFERENCE CHARACTERS

- 1: Aerosol Product
- 100: Container
- 300: Pallet
- 301: Fork Pocket
- S1 to S4: Gap

## Claims

1. A method for controlling an insect pest in a container accommodating at least one cargo item, the method comprising:
preparing an aerosol product containing an insecticide and a propellant for jetting the insecticide; and
jetting the insecticide from a jetting port of the aerosol product, with the jetting port directed toward a gap in the container, and closing a door of the container after the jetting of the insecticide.

2. The method of claim 1, wherein
the insecticide is jetted toward a gap formed between a wall surface of the container and the at least one cargo item.

3. The method of claim 1, wherein
the insecticide is jetted toward a gap formed between one of a plurality of cargo items accommodated in the container and another cargo item adjacent to the one of the cargo items.

4. The method of claim 1, wherein
the at least one cargo item is placed on a pallet, and
the insecticide is jetted toward a gap of a fork pocket formed in the pallet.

5. The method of claim 1, wherein
an aerosol product containing a chemical that contains, as the insecticide, at least one of transfluthrin or metofluthrin is prepared.

6. The method of claim 1, wherein
20 mg or more of the insecticide is jetted into the gap.

7. The method of claim 4, wherein
40 mg or more of the insecticide is jetted into the gap.
